# EUROPEAN PATENT APPLICATION

(11) **EP 4 787 987 A1**
(43) Date of publication of application: **05.08.2026**
(21) Application number: 23953335.9
(22) Date of filing: 25.09.2023
(51) Int. Cl.: H04W 64/00

(54) **SIDELINK POSITIONING METHOD AND COMMUNICATION DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/121214
(87) International publication number: WO 2025/065170

(57) **Abstract**

A sidelink positioning method and a communication device are provided. The method is applicable to a first device, and includes: determining a propagation time between a first terminal device and a second terminal device based on first information to position the second terminal device, wherein the first information is used for indicating a time difference between times when a terminal device receives a pilot signal and transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

## Description

### TECHNICAL FIELD

The present disclosure relates to the technical field of communications, and in particular, relates to a sidelink positioning method and a communication device.

### BACKGROUND

By round trip time (RTT)-based positioning, a terminal device may be positioned by measuring a time interval between a time when a signal is transmitted and a time when a returned signal is received. However, in sidelink positioning, in some occasions, for example, in a case where a synchronization time difference is present between terminal devices participating in sidelink positioning, some errors may be caused to the RTT-based positioning.

### SUMMARY

Embodiments of the present disclosure provide a sidelink positioning method and a communication device. Various aspects of the present disclosure are described in detail hereinafter.

In a first aspect, a sidelink positioning method is provided. The method is applicable to a first device, and includes: determining a propagation time between a first terminal device and a second terminal device based on first information to position the second terminal device, wherein the first information is used for indicating a time difference between times when a terminal device receives a pilot signal and transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In a second aspect, a sidelink positioning method is provided. The method is applicable to a first terminal device, and includes: transmitting first information to a first device, wherein the first information is used for determining a propagation time between the first terminal device and a second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In a third aspect, a sidelink positioning method is provided. The method is applicable to a second terminal device, and includes: transmitting first information to a first device, wherein the first information is used for determining a propagation time between a first terminal device and the second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In a fourth aspect, a communication device is provided. The communication device is a first device, and includes: a determining unit, configured to determine a propagation time between a first terminal device and a second terminal device based on first information to position the second terminal device; wherein the first information is used for indicating a time difference between times when a terminal device receives a pilot signal and transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In a fifth aspect, a communication device is provided. The communication device is a first terminal device, and includes: a first transmitting unit, configured to transmit first information to a first device, wherein the first information is used for determining a propagation time between the first terminal device and a second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In a sixth aspect, a communication device is provided. The communication device is a second terminal device, and includes: a first transmitting unit, configured to transmit first information to a first device, wherein the first information is used for determining a propagation time between a first terminal device and the second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In a seventh aspect, a communication device is provided. The communication device includes a transceiver, a memory, and a processor, wherein the memory is configured to store one or more programs, and the processor is configured to call the one or more programs stored in the memory and control the transceiver to receive or transmit a signal to cause the communication device to perform the method according to any of the first to third aspects.

In an eighth aspect, an apparatus is provided. The apparatus includes a processor, wherein the processor is configured to call one or more programs from a memory to cause the apparatus to perform the method according to any of the first to third aspects.

In a ninth aspect, a chip is provided. The chip includes a processor, wherein the processor is configured to call one or more programs from a memory to cause a device equipped with the chip to perform the method according to any of the first to third aspects.

In a tenth aspect, a computer-readable storage medium storing one or more programs therein is provided. The one or more programs, when loaded and run by a computer, cause the computer to perform the method according to any of the first to third aspects.

In an eleventh aspect, a computer program product is provided. The computer program product includes one or more programs, wherein the one or more programs, when loaded and run by a computer, cause the computer to perform the method according to any of the first to third aspects.

In a twelfth aspect, a computer program is provided. The computer program, when loaded and run by a computer, causes the computer to perform the method according to any of the first to third aspects.

In the embodiments of the present disclosure, during determination of an RTT between terminal devices, the time when the pilot signal is transmitted or the time when the pilot signal is received is converted or corrected. The conversion or correction takes into account factors that cause positioning errors, for example, a synchronization time difference, thereby helping to improve the accuracy of positioning results.

### BRIEF DESCRIPTION OF THE DRAWINGS

FIG. 1 is a schematic diagram of system architecture of a wireless communication system applicable to embodiments of the present disclosure;
FIG. 2 is a schematic flowchart of an air interface RTT-based positioning method;
FIG. 3 is a schematic diagram of an RTT-based positioning technique in an air interface;
FIG. 4 is a schematic diagram of principles of a sidelink RTT-based positioning method;
FIG. 5 is a schematic flowchart of a sidelink positioning method according to some embodiments of the present disclosure.
FIG. 6 is a schematic diagram of a sidelink RTT-based positioning method;
FIG. 7 is a schematic diagram of a sidelink RTT-based positioning method;
FIG. 8 is a schematic structural diagram of a communication device according to some embodiments of the present disclosure;
FIG. 9 is a schematic structural diagram of a communication device according to some embodiments of the present disclosure;
FIG. 10 is a schematic structural diagram of a communication device according to some embodiments of the present disclosure; and
FIG. 11 is a schematic structural diagram of an apparatus applicable to embodiments of the present disclosure.

### DETAILED DESCRIPTION

The technical solutions of the present disclosure are described in detail with reference to the accompanying drawings.

### Architecture of communication system

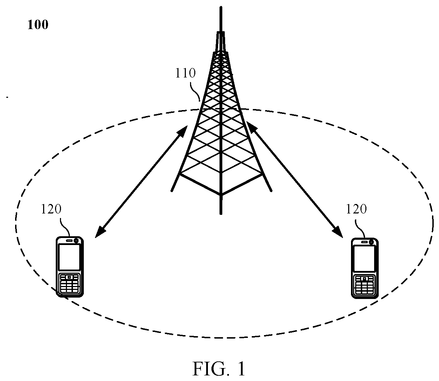

FIG. 1 is a schematic diagram of system architecture of a wireless communication system 100 applicable to embodiments of the present disclosure. The wireless communication system 100 includes a network device 110 and a terminal device 120. The network device 110 may be a device in communication with the terminal device 120. The network device 110 may provide communication coverage for a specific geographical region, and may communicate with any terminal 120 within the coverage area.

FIG. 1 exemplarily illustrates one network device and one terminal device. Optionally, the wireless communication system 100 may include one or more network devices 110 and/or one or more terminal devices 120. With respect to one network device 110, the one or more terminal devices 120 may all be within a network coverage of the network device 110, or may all be outside the network coverage of the network device 110, or may be partially within the network coverage of the network device 110 and partially outside the network coverage of the network device 110, which is not limited in the embodiments of the present disclosure.

Optionally, the wireless communication system 100 may further include another network entity such as a network controller, a mobility management entity, or the like, which is not limited in the embodiments of the present disclosure.

It should be understood that the technical solutions according to the embodiments of the present disclosure may be applied to various communication systems, for example: a 5^{th} generation (5G) or a new radio (NR) system, a long-term evolution (LTE) system, an LTE frequency-division duplex (FDD) system, an LTE time-division duplex (TDD) system, or the like. The technical solutions according to the present disclosure may also be applied to future communication systems, such as a 6^{th} generation (6G) mobile communication system, such as a satellite communication system or the like.

The terminal device according to the embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a wireless communication device, a user agent, or a user apparatus. The terminal device according to the embodiments of the present disclosure may refer to a device providing voice and data connectivity for users, or device capable of connecting to human, things, and machines, for example, a handheld device, a vehicle-mounted device or the like having a wireless connection function. The terminal device according to the embodiments of the present disclosure may be a mobile phone, a pad, a laptop, a palmtop, a mobile Internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. Optionally, the UE may serve as a base station. For example, the UE may serve as a dispatch entity, which provides sidelink signals between terminal devices in vehicle-to-everything (V2X) or device-to-device (D2D) communications or the like. For example, a cellular phone and a vehicle communicate with each other based on the sidelink signals. The cellular phone and a smart home device communicate with each other, with no need of relaying communication signals over a base station.

The network device according to the embodiments of the present disclosure may be a device for communicating with the terminal device. The network device may also be referred to as an access network device or a wireless access device. For example, the network device may be a base station. The network device according to the embodiments of the present disclosures may refer to a radio access network (RAN) node (or device) that accesses a terminal device to a wireless network. The base station may broadly cover or replace various names such as, a node B (NodeB), an evolved base station (evolved NodeB, eNB), a next generation base station (next generation NodeB, gNB), a relay station, a transmitting and receiving point (TRP), a transmitting point (TP), an access point (AP), a primary station MeNB, and a secondary station SeNB, an multi-standard radio (MSR) node, a home base station, a network controller, an access node, a wireless node, a transmission node, a transceiver node, a baseband unit (BBU), a remote ratio unit ( RRU), an active antenna unit (AAU), a remote radio head (RRH), and a central unit (CU), a distributed unit (DU), a positioning node, and the like. The base station may be a macro base station, a micro base station, a relay node, a donor node, or the like, or a combination thereof. The base station may also refer to a communication module, a modem, or a chip configured in the above apparatus or device. The base station may also be a mobile switching center and a device in D2D, V2X, or machine-to-machine (M2M) communication to assume the function of a base station, a network-side device in a 6G network, a device in a future communication system to assume the function of a base station, or the like. The base station may support networks of the same or different access technologies. The embodiments of the present disclosure do not limit the specific technology adopted by a network device and the specific device form.

The base station may be stationary or mobile. For example, a helicopter or unmanned aerial vehicle may be configured to serve as a mobile base station, and one or more cells may move depending on the location of the mobile base station. In other examples, the helicopter or unmanned aerial vehicle may be configured to serve as a device to communicate with another base station.

In some deployments, the network device according to the embodiments of the present disclosure may refer to a CU or a DU, or the network device includes a CU and a DU. The gNB may also include an AAU.

The network device and the terminal devices may be deployed on land, including indoor or outdoor, hand-held, or vehicle-mounted; or may be deployed on the water surface; or may be deployed on airplanes, balloons, and satellites. In the embodiments of the present disclosure, the scenario wherein the network device and the terminal devices are located is not limited.

It will be understood that all or part of the functionality of the communication devices in the present disclosure may also be implemented by software functions running on hardware, or by virtualization functions instantiated on a platform, such as a cloud platform.

### RTT-based positioning method

An NR sidelink system supports RTT-based positioning. The RTT is used for measuring a time interval from an instant when a signal is transmitted to an instant when a returned signal is received in a positioning system. This time interval may reflect a total time length from a time when the signal is transmitted from a transmitter to a time when the returned signal is returned from a receiver and received at the transmitter.

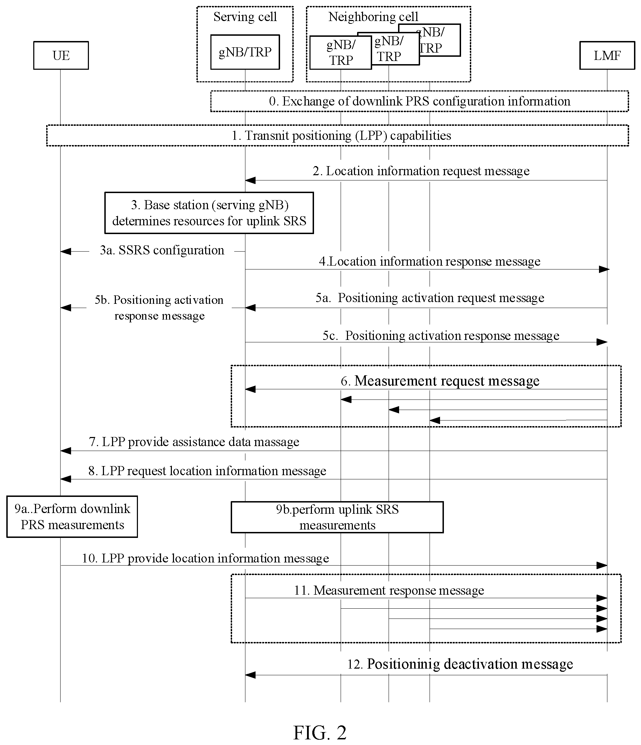

An RRT positioning method is described hereinafter with reference to FIG. 2. The method illustrated in FIG. 2 may be applied in air interface (Uu-interface) communications. The method illustrated in FIG. 2 includes steps 0 to 12.

In step 0, a location management function (LMF) acquires TRP information required for multi-round trip time (multi-RTT) positioning.

In step 1, the LMF requests positioning capabilities of a target device.

In step 2, the LMF transmits an NRPPa location information request message to a serving gNB to request uplink (UL) information of the target device.

In step 3, the serving gNB determines resources available for an uplink synchronization reference signal, for example, an uplink sounding reference signal (UL-SRS).

In step 3a, the serving gNB configures a UL-SRS resource set for the target device.

In step 4, the serving gNB provides UL-SRS configuration information to the LMF over a response message of NRPPa location information. It should be noted that whether the SRS configuration precedes a downlink positioning reference signal (DL-PRS) configuration depends on the implementation method.

In step 5 (including steps 5a to 5c), in the case of semi-persistent or non-periodic SRS, the LMF may request activation of SRS transmission of a UE by transmitting an NRPPa positioning activation request message to the serving gNB of the target device. The gNB then activates the SRS transmission of the UE and transmits an NRPPa positioning activation response message. The target device starts the UL-SRS transmission based on a time domain behavior of the UL-SRS resource configuration.

In step 6, the LMF provides UL information to a selected gNB over an NRPPa measurement request message. The message includes all information required to enable a gNB/TRP to perform UL measurements.

In step 7, the LMF transmits an LTE Positioning Protocol (LPP) provide assistance data message to the target device. The message includes any assistance data required for the target device to perform necessary DL-PRS measurements.

In step 8, the LMF transmits an LPP request location information message to request multi-RTT measurements.

In step 9a, the DL-PRS measurements are performed. The target device measures all DL-PRS transmitted by the gNB in step 7.

In step 9b, UL-SRS measurements are performed. Each gNB configured in step 6 measures the SRS from the target device.

In step 10, the target device reports DL-PRS measurement results for the multi-RTT to the LMF, and the report is included in an LPP provide location information message.

In step 11, each gNB reports the SRS measurement results to the LMF, and the report is included in an NRPPa measurement response message.

In step 12, the LMF transmits an NRPPa positioning deactivation message to the serving gNB.

Finally, the LMF may determine the RTT of each gNB and calculate the location of the target device by calculating an Rx-Tx time difference of the UE and the gNB based on the corresponding UL and DL measurements provided in steps 10 and 11.

In some protocols (e.g., TS 38.215 R17), the RTT-based positioning method based on the air interface is implemented by calculating an Rx-Tx time difference of the terminal device. The Rx-Tx time difference of a terminal device refers to a timing difference between a time when the terminal device receives a downlink subframe and a time when the terminal device transmits an uplink subframe.

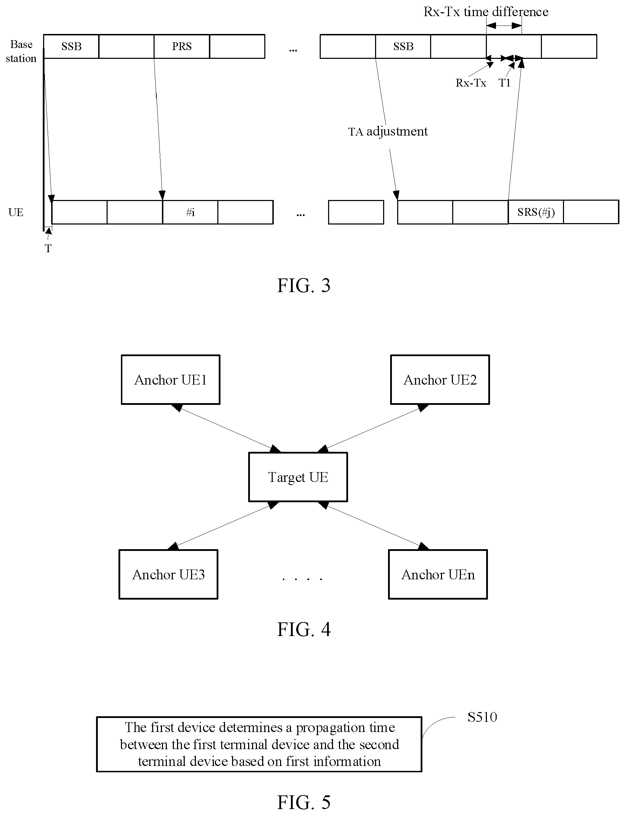

The Rx-Tx time difference of the terminal device is calculated as follows: the Rx-Tx time difference of the terminal device = T_{UE-RX}-T_{UE-TX}. T_{UE-RX} refers to a timing when the terminal device receives a downlink subframe #i from the base station (or transmission/reception point (TP)), and the downlink subframe #i may be defined based on a time when the terminal device detects a first transmission path. T_{UE-TX} refers to a timing when the terminal device transmits an uplink subframe #j. The uplink subframe #j is closest in time to the downlink subframe #i. Simply, the Rx-Tx time difference of the terminal device is a time interval between reception of the downlink subframe by the terminal device from the base station and transmission of the uplink subframe with a time similar to the received downlink subframe, as illustrated in FIG. 3.

The Rx-Tx time difference illustrated in FIG. 3 is an RTT between the terminal device and the base station. The RTT may be a time interval (or time difference) between a time when the uplink subframe is received by a network device and a header of the frame. This approach is valid because the downlink subframes transmitted by the base station are aligned with the subframes of the terminal device in time, and the Rx-Tx time difference of the terminal device is an integer multiple of the number of subframes. Since the transmission delay of the signal used for positioning generally does not exceed one subframe, an RTT between the terminal device and the base station calculated by using the above method is consistent with the actual situation.

It should be noted that the RTT calculated by using the above method may include a timing advance (TA) (e.g., T1 in FIG. 3), and thus correction based on the TA is required in calculation of a distance between the base station and the terminal device.

The RTT-based positioning method may also be applied to sidelink communication scenarios, and the RTT-based positioning method in sidelink communication is described hereinafter with reference to FIG. 4.

An SL-RTT-based positioning method may utilize measurements of sidelink signals received by a target UE from one or more anchor terminal devices (e.g., an anchor UE1 to an anchor UEn in FIG. 4), and measurements of the sidelink signals transmitted from the target UE on the one or more anchor UEs. Further, a location of a target terminal device (for example, the target UE in FIG. 4) may be estimated based on the above measurement results.

The above anchor terminal devices refer to user terminals that act as reference points or references in positioning, measurement, or other functions. The anchor point terminal devices are typically used to provide reference signals or perform measurements to support positioning of other terminals.

In sidelink communication, sidelink positioning may be achieved by using a measurement result of a delay between a received sidelink signal and a transmitted sidelink signal. However, in sidelink communication, in some occasions, for example, in a case where a synchronization time difference is present between terminal devices participating in sidelink positioning, some errors may be caused to the RTT-based positioning.

In the RTT-based positioning method based on the Uu interface mentioned above, the terminal devices may determine their downlink and uplink timings based on a timing of the base station. However, unlike the Uu interface, for sidelink communication, synchronization time differences may be present between a plurality of terminal devices. For example, the use of different time references or reference clocks by the target UE and the anchor UE, or timing errors due to clock drift of the terminal devices may result in synchronization time differences between the plurality of terminal devices. As a result, the consistency and accuracy of the positioning are affected.

In view of the above problem, the present disclosure provides a sidelink positioning method to improve the accuracy of the RTT-based positioning method in a sidelink system. Detailed description is given hereinafter to embodiments of the present disclosure with reference to the accompanying drawings.

FIG. 5 is a schematic flowchart of a sidelink positioning method according to some embodiments of the present disclosure. The method as illustrated in FIG. 5 is described from the perspective of interaction between a first device, and a first terminal device and a second terminal device.

The first device is a device capable of implementing positioning management, for example, an LMF, or a terminal device having a positioning management function. In some embodiments, the first device may be a positioning server.

The first terminal device and the second terminal device may be terminal devices participating in sidelink positioning. The method as illustrated in FIG. 5 may be employed to position the first terminal device or the second terminal device. In some embodiments, the first terminal device may be the anchor UE as described above, that is, a reference terminal device; and the second terminal device may be the target UE as described above, that is, a device to be positioned. Hereinafter, the method as illustrated in FIG. 5 is described using positioning the second terminal device as an example.

Referring to FIG. 5, in step S510, the first device determines a propagation time between the first terminal device and the second terminal device based on first information.

In some embodiments, the first information may be used for indicating a time difference between a time when a pilot signal is received and a time when a pilot signal is transmitted (Rx-Tx time difference), or a time interval. In some embodiments, the pilot signal is transmitted and received by a same terminal device, that is, the first information may be used for indicating a time difference between a time when a terminal device receives a pilot signal and a time when the terminal device transmits a pilot signal. For example, the first information may be used for indicating a time difference between a time when a first terminal device receives a pilot signal and a time when the first terminal device transmits a pilot signal. Still for example, the first information may be used for indicating a time difference between a time when a second terminal device receives a pilot signal and a time when the second terminal device transmits a pilot signal. Still for example, the first information may be used for indicating a time difference between a time when a first terminal device receives a pilot signal and a time when the first terminal device transmits a pilot signal, and a time difference between a time when a second terminal device receives a pilot signal and a time when the second terminal device transmits a pilot signal.

In some embodiments, the time when the pilot signal is received and the time when the pilot signal is transmitted may be respectively an actual time when the pilot signal is received and an actual time when the pilot signal is transmitted. For example, in a case where no synchronization time difference is present between the first terminal device and the second terminal device, the first information may indicate a time difference between the actual time when the pilot signal is received and the actual time when the pilot signal is transmitted.

In some embodiments, the time when the pilot signal is transmitted may be a converted time when the pilot signal is transmitted, or the time when the pilot signal is received may be a converted time when the pilot signal is received. Alternatively, the time when the pilot signal is transmitted is a corrected time when the pilot signal is transmitted, and/or the time when the pilot signal is received is a corrected time when the pilot signal is received.

For example, in a case where the synchronization time difference is present between the first terminal device and the second terminal device, the first information may indicate a time difference between the converted time when the pilot signal is transmitted and the actual time when the pilot signal is received, or a time difference between the actual time when the pilot signal is transmitted and the converted time when the pilot signal is received.

In some embodiments, the converted time when the pilot signal is transmitted may be determined based on the actual time when the pilot signal is transmitted. In some embodiments, the converted time when the pilot signal is transmitted may be determined based on the actual time when the pilot signal is transmitted and the synchronization time difference between the first terminal device and the second terminal device. For example, the converted time when the pilot signal is transmitted may be a sum of the actual time when the pilot signal is transmitted and the synchronization time difference described above. The synchronization time difference may be a positive or negative value, and the positive or negative value of the synchronization time difference depends on the timing of the first terminal device and the second terminal device.

In some embodiments, the converted time when the pilot signal is received may be determined based on the actual time when the pilot signal is received. In some embodiments, the converted time when the pilot signal is received may be determined based on the actual time when the pilot signal is received, and the synchronization time difference between the first terminal device and the second terminal device. For example, the converted time when the pilot signal is received may be a sum of the actual time when the pilot signal is received and the synchronization time difference described above. The synchronization time difference may be a positive or negative value, and the positive or negative value of the synchronization time difference depends on the timing of the first terminal device and the second terminal device.

To simplify the method of calculating the propagation time between the first terminal device and the second terminal device, the time when the pilot signal is transmitted may be the converted time when the pilot signal is transmitted, and the time when the pilot signal is received may be the actual time when the pilot signal is received. That is, the first information may be used for indicating the time difference between the converted time when the pilot signal is transmitted and the actual time when the pilot signal is received.

It should be noted that the time when the pilot signal is transmitted and the time when the pilot signal is received are directed to pilot signals at different instants. For example, the time when the pilot signal is transmitted is directed to the pilot signal transmitted by the second terminal device to the first terminal device at the subframe #j, and the time when the pilot signal is received is directed to the pilot signal received by the second terminal device from the first terminal device at the subframe #i.

In some embodiments, the pilot signal is a reference signal for sidelink positioning, for example, the pilot signal may be a positioning reference signal (PRS).

In some embodiments, the first information is used for determining an RTT between the first terminal device and the second terminal device. That is, the method illustrated in FIG. 5 may be applied to the RTT-based positioning method.

In the embodiments of the present disclosure, during determination of the RTT between the first terminal device and the second terminal device, the time when the pilot signal is transmitted or the time when the pilot signal is received is converted or corrected. The conversion or correction takes into account factors that cause positioning errors, for example, the synchronization time difference between the first terminal device and the second terminal device, thereby helping to improve the accuracy of the positioning results.

As mentioned above, whether a synchronization time difference is present between the first terminal device and the second terminal device may affect the positioning accuracy of the terminal device. The method according to the embodiments of the present disclosure is described hereinafter with respect to the above two situations.

The sidelink communication typically supports three potential synchronization sources: a global navigation satellite system (GNSS), a base station, and a synchronization reference terminal device. The synchronization reference terminal device refers to a terminal device capable of being directly synchronized to the GNSS or the base station. Alternatively, the synchronization reference terminal device may also refer to a terminal device capable of being synchronized to other synchronization reference terminal devices. Where no sidelink carrier resource is configured for a terminal device, typically, the terminal device may only take the GNSS or the base station as a synchronization source.

Accordingly, in a case where the first terminal device or the second terminal device is the synchronization source, for example, the first terminal device is a synchronization source of the second terminal device or the second terminal device is a synchronization source of the first terminal device, no synchronization time difference is present between the first terminal device and the second terminal device.

In some embodiments, the first device may receive information for indicating whether the first terminal device or the second terminal device is a synchronization source. For example, the information may be carried in the first information, or the first information may include the information. The information may be reported by a synchronization resource device of the first terminal device or the second terminal device.

In some embodiments, the synchronization source information may include one or more of: a synchronization source identifier (e.g., an ID); information indicating whether the first terminal device is the synchronization source of the second terminal device; and information indicating whether the second terminal device is the synchronization source of the first terminal device.

In a case where the first terminal device is a synchronization source of the second terminal device, or the second terminal device is a synchronization source of the first terminal device, the first device may determine the propagation time between the first terminal device and the second terminal device solely based on an Rx-Tx time difference of the terminal device receiving the returned pilot signal. The terminal device receiving the returned pilot signal is a terminal device in the first terminal device and the second terminal device that receives the returned pilot signal. For example, in a case where the first terminal device transmits a pilot signal to the second terminal device and receives a returned pilot signal from the second terminal device, the first terminal device is the terminal device receiving the returned pilot signal.

Taking the terminal device receiving the returned pilot signal as the first terminal device as an example, in some embodiments, the first device may determine the propagation time between the first terminal device and the second terminal device solely based on the Rx-Tx time difference of the first terminal device, or the first device may determine the propagation time between the first terminal device and the second terminal device even not based on the Rx-Tx time difference of the second terminal device.

Still taking the terminal device receiving the returned pilot signal as the first terminal device as an example, since the second terminal device and the first terminal device are synchronized, the Rx-Tx time difference of the second terminal device differs by an integer multiple of the number of subframes. Typically, since the transmission delay between the terminal devices is less than one subframe, in ranging estimation based on the propagation time, the Rx-Tx time difference of the second terminal device includes an integer multiple of the number of subframes, which is obviously an estimation error and may be ignored.

In some embodiments, the first information may be reported by a terminal device, in the first terminal device and the second terminal device that receives a returned pilot signal, that is, the first terminal device.

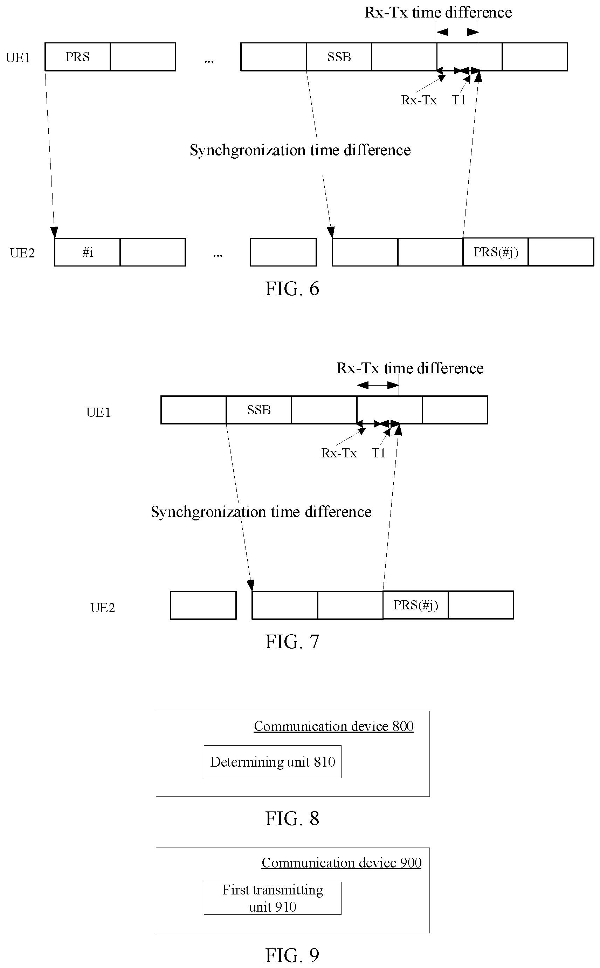

In some embodiments, since the propagation delay of the pilot signal is generally less than the length of a subframe, the propagation time between the first terminal device and the second terminal device may be a difference between the Rx-Tx time difference of the terminal device receiving the returned pilot signal and the length of the complete subframe contained therein, as illustrated by the Rx-Tx time difference in FIG. 6.

For example, the first information is mod(d,T), wherein T represents a subframe time length, and d represents a time difference between an actual time when the first terminal device transmits the pilot signal and an actual time when the first terminal device receives the pilot signal, and mod represents a reminder operation.

In some embodiments, the propagation time between the first terminal device and the second terminal device may be mod(t,T)/2, wherein T represents the subframe time length, and t represents the time difference between the time when the pilot signal is received and the time when the pilot signal is transmitted indicated in the first information.

In some embodiments, the first device may transmit first indication information to the first terminal device or the second terminal device, wherein the first indication information is used for indicating that the first terminal device or the second terminal device does not report a time difference between an actual time when the pilot signal is transmitted and an actual time when the pilot signal is received. As described above, the propagation time between the first terminal device and the second terminal device may be determined solely based on the Rx-Tx time difference of the terminal device receiving the returned pilot signal. Therefore, to reduce overhead, the terminal device that does not receive the returned pilot signal may not report the Rx-Tx time difference of the pilot signal. Correspondingly, the first device transmits the first indication information to the first terminal device or the second terminal device in a case where no synchronization time difference is present between the first terminal device and the second terminal device.

In some embodiments, the first indication information as described above may be transmitted by the synchronization source to the first terminal device or the second terminal device.

In some embodiments, the first device receives second information in a case where a synchronization time difference is present between the first terminal device and the second terminal device, wherein the second information is used for indicating the synchronization time difference. For example, the second information may be used for converting the time when the pilot signal is transmitted.

The second information may be reported by the first terminal device or may be reported by the second terminal device. Alternatively, the second information may be reported by the synchronization resource of the first terminal device or the second terminal device.

In some embodiments, prior to receiving the second information, the first device may transmit a report request for the second information to a synchronization source of the first terminal device or the second terminal device. Whether the report request is transmitted to the first terminal device or to the second terminal device may be determined based on a synchronization state between the first terminal device and the second terminal device.

In some embodiments, the synchronization source in the system may transmit information about the terminal device in synchronization with the first device, such that the first device may determine whether a synchronization difference is present between the first terminal device and the second terminal device. For example, the first device may receive third information from one or more synchronization sources, wherein the third information is used for indicating a terminal device in synchronization with the one or more synchronization sources. Since this behavior may be pre-reported prior to sidelink positioning, the method facilitates reduction of the positioning delay.

In order to be compatible with the RTT-based positioning method using the air interface, the definition of the Rx-Tx time difference in the air interface may be referred to that in the sidelink communication. For example, the Rx-Tx time difference of the terminal device may be defined as T_{UE-RX}-T_{UE-TX}, that is, the time difference between the time when the pilot signal is received and the time when the pilot signal is transmitted, that is, the Rx-Tx time difference as mentioned above.

Taking UE2 in FIG. 6 as an example, the parameters associated with the Rx-Tx time difference are described hereinafter.

In some embodiments, a timing T_{UE-RX} when the pilot signal is received may be the timing of the sidelink subframe #i received by UE2 from UE1, which is defined by a first path detected in time.

In a case where no synchronization time difference is present between the first terminal device and the second terminal device, timing boundaries of sidelink transmission are the same, that is, a boundary of the timing of sidelink reception is the same as a boundary of the timing of the closest sidelink transmission. This means that the timing of the sidelink subframe #j (that is, the subframe in which UE2 transmits the pilot signal) is closest to the timing of the sidelink subframe #i (that is, the subframe in which UE2 receives the pilot signal from UE1) as illustrated in FIG. 6.

Therefore, a time T_{UE-TX} when the pilot signal is transmitted includes one or more of: an instant when the pilot signal is transmitted; a timing of a second subframe, wherein the second subframe is a transmission subframe closest to the time when the pilot signal is received; and a timing of a third subframe, wherein the third subframe is a subframe for transmitting the pilot signal. In a case where UE2 reports SL-PRS transmission time information, T_{UE-TX} may be the instant when the pilot signal is transmitted or the timing of the third subframe as described above. In a case where UE2 does not report the SL-PRS transmission time information, T_{UE-TX} may be the timing of the second subframe as described above. The timing of the subframe mentioned herein may include, for example, a start time of the subframe or an end time of the subframe.

The method according to the embodiments of the present disclosure is described hereinafter with reference to FIG. 7.

Referring to FIG. 7, the first terminal device may be UE1 and the second terminal device may be UE2. UE1 may be a target UE in sidelink positioning and UE2 may be an anchor UE in sidelink positioning.

In a case where UE 1 and UE 2 are synchronized, for example, UE1 is a synchronization source of UE2 or UE2 is a synchronization source of UE1, UE1 may not report positioning measurement results to the first device, and UE2 may report the positioning measurement results to the first device. That is, the first device may determine a propagation time between UE1 and UE2 based on the positioning measurement results of UE2. The positioning measurement results herein may include one or more of: the Rx-Tx time difference, the time when the pilot signal is transmitted, and the time when the pilot signal is received.

As mentioned above, the first device may determine the propagation time between UE1 and UE2 based on the positioning measurement results of both UE1 and UE2, or based solely on the positioning measurement results of UE1. Thus, in a case where UE1 and UE2 are synchronized, UE2 may also report to the first device a message indicating that UE1 and UE2 are synchronized to indicate how the first device determines the propagation time between UE1 and UE2 (i.e., to instruct the first device to determine the propagation time between UE1 and UE2 based solely on the positioning measurement results of UE1).

In a case where UE1 and UE2 are not synchronized, that is, the synchronization time difference is present between UE1 and UE2, and UE1 and UE2 are synchronized to a same synchronization source, UE1 may report the Rx-Tx time difference to the first device, UE2 may not report the Rx-Tx time difference, and the synchronization source may report the synchronization time difference between UE1 and UE2 to the first device.

In addition, the synchronization source may notify UE2 of the above synchronization information (i.e., UE1 and UE2 are synchronized to the same synchronization source), such that UE2 may determine whether to report the Rx-Tx time difference.

In some embodiments, the one or more synchronization sources may report information about the terminal device in synchronization with to the first device, such that the first device may request the target UE to report the measurement results for the anchor UE based on whether the synchronization sources of the terminal devices are the same or different.

Before performing sidelink positioning, it is usually necessary to configure positioning resources. Taking the first device as an LMF as an example, a resource configuration process for sidelink positioning is described hereinafter, which may include steps 0 to 6.

In step 0, the LMF acquires information about a reference device (e.g., the anchor UE as mentioned above) required for multi-RTT-based positioning.

In step 1, the LMF requests positioning capabilities of a target device.

In step 2, the LMF transmits an NRPPa location information request message to a serving gNB to request UL or SL information of the target device.

In step 3, the service gNB determines the resources available for SL-PRS and configures an SL-PRS resource set for the target device.

In step 4, the service gNB provides SL-PRS configuration information to the LMF via an NRPPa location information response message. The target device starts SL-PRS transmission according to a time domain behavior of the SL-PRS resource configuration.

In step 5, the LMF provides the SL information to a selected reference device via an NRPPa measurement request message. The measurement request message may include all the information necessary for the reference device to perform SL measurements.

In step 6, each reference device configured by the LMF measures PRS transmission from the target device.

Still taking the first device as the LMF as an example, an information interaction process for sidelink positioning is described hereinafter, which may include steps 0 to 5.

In step 0, the LMF transmits an LPP provide assistance data message to the target device. The message includes any assistance data required for the target device to perform necessary SL-PRS measurements.

In step 1, the LMF transmits an LPP request location information message to request multi-RTT measurements.

In step 2, the target device performs the SL-PRS measurements.

In step 3, the target device reports SL-PRS measurement results for the multi-RTT to the LMF. The measurement results may include the synchronization time difference, and the report may be included in an LPP provide location information message.

In step 4, the reference device reports the SL-PRS measurement results to the LMF, and the report is included in an LPP measurement response message.

In step 5, the LMF calculates the Rx-Tx time difference of the target device based on the corresponding measurement results in steps 3 and 4, thereby determining each RTT, and the location of the target device is calculated based on the multi-RTT.

The above sections, with reference to FIG. 1 to FIG. 7, describe in detail the method embodiments of the present disclosure. The following sections, with reference to FIG. 8 to FIG. 11, describe in detail the apparatus embodiments of the present disclosure. It should be understood that the description of the method embodiments corresponds to the description of the apparatus embodiments, such that the parts that are not described in detail may be referred to the preceding method embodiments.

FIG. 8 is a schematic structural diagram of a communication device according to some embodiments of the present disclosure. The communication device 800 as illustrated in FIG. 8 may be the first device as described above. The communication device 800 may include a determining unit 810.

The determining unit 810 is configured to determine a propagation time between a first terminal device and a second terminal device based on first information to position the second terminal device, wherein the first information is used for indicating a time difference between times when a terminal device receives a pilot signal and transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In some embodiments, the pilot signal may be a PRS.

In some embodiments, the first information is used for indicating information that indicates whether the first terminal device or the second terminal device is a synchronization source.

In some embodiments, in a case where the first terminal device is a synchronization source of the second terminal device or the second terminal device is a synchronization source of the first terminal device, the first information is reported by a terminal device in the first terminal device and the second terminal device that receives a returned pilot signal.

In some embodiments, the first information is mod(d,T), wherein T represents a subframe time length, d represents a time difference between an actual time when the first terminal device transmits the pilot signal and an actual time when the first terminal device receives the pilot signal, and mod represents a reminder operation.

In some embodiments, the propagation time between the first terminal device and the second terminal device is mod(t,T)/2, wherein T represents the subframe time length, and t represents the time difference between the time when the pilot signal is received and the time when the pilot signal is transmitted indicated in the first information.

In some embodiments, the communication device further includes: a first transmitting unit, configured to transmit first indication information to the first terminal device or the second terminal device, wherein the first indication information is used for indicating that the first terminal device or the second terminal device does not report a time difference between an actual time when the pilot signal is transmitted and an actual time when the pilot signal is received.

In some embodiments, transmitting the first indication information to the first terminal device or the second terminal device includes: transmitting the first indication information to the first terminal device or the second terminal device in a case where no synchronization time difference is present between the first terminal device and the second terminal device.

In some embodiments, the communication device further includes: a first receiving unit, configured to receive second information in a case where a synchronization time difference is present between the first terminal device and the second terminal device, wherein the second information is used for indicating the synchronization time difference.

In some embodiments, the second information is transmitted by a synchronization source of the first terminal device or the second terminal device.

In some embodiments, the communication device further includes: a second transmitting unit, configured to prior to receiving the second information, transmit a report request for the second information to a synchronization source of the first terminal device or the second terminal device.

In some embodiments, the communication device further includes: a second receiving unit, configured to receive third information from one or more synchronization sources, wherein the third information is used for indicating a terminal device in synchronization with the one or more synchronization sources.

In some embodiments, a time T_{UE-TX} when the pilot signal is transmitted includes one or more of: an instant when the pilot signal is transmitted; a timing of a second subframe, wherein the second subframe is a transmission subframe closest to the time when the pilot signal is received; and a timing of a third subframe, wherein the third subframe is a subframe for transmitting the pilot signal.

In some embodiments, the timing of the subframe includes a start time of the subframe or an end time of the subframe.

In some embodiments, the first device is a positioning server.

FIG. 9 is a schematic structural diagram of a communication device 900 according to some embodiments of the present disclosure. The communication device 900 as illustrated in FIG. 9 may be the first terminal device as described above.

The communication device 900 includes: a first transmitting unit 910, configured to transmit first information to a first device, wherein the first information is used for determining a propagation time between the first terminal device and a second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In some embodiments, the pilot signal may be a PRS.

In some embodiments, the first information is used for indicating information that indicates whether the first terminal device or the second terminal device is a synchronization source.

In some embodiments, the communication device further includes: a second transmitting unit, configured to transmit the first information to the first device in response to the first terminal device being a terminal device receiving a returned pilot signal in a case where the first terminal device is a synchronization source of the second terminal device or the second terminal device is a synchronization source of the first terminal device.

In some embodiments, the first information is mod(d,T), wherein T represents a subframe time length, d represents a time difference between an actual time when the first terminal device transmits the pilot signal and an actual time when the first terminal device receives the pilot signal, and mod represents a reminder operation.

In some embodiments, the propagation time between the first terminal device and the second terminal device is mod(t,T)/2, wherein T represents the subframe time length, and t represents the time difference between the time when the pilot signal is received and the time when the pilot signal is transmitted indicated in the first information.

In some embodiments, the communication device further includes: a first receiving unit, configured to receive first indication information from the first device or a synchronization source, wherein the first indication information is used for indicating that the first terminal device does not report a time difference between an actual time when the pilot signal is transmitted and an actual time when the pilot signal is received.

In some embodiments, receiving the first indication information from the first device or the synchronization source includes: receiving the first indication information from the first device or the synchronization source in a case where no synchronization time difference is present between the first terminal device and the second terminal device.

In some embodiments, the communication device further includes: a second receiving unit, configured to receive a report request for second information from the first device in a case where a synchronization time difference is present between the first terminal device and the second terminal device and the first terminal device is a synchronization source, wherein the second information is used to indicating the synchronization time difference.

In some embodiments, a time T_{UE-TX} when the pilot signal is transmitted includes one or more of: an instant when the pilot signal is transmitted; a timing of a second subframe, wherein the second subframe is a transmission subframe closest to the time when the pilot signal is received; and a timing of a third subframe, wherein the third subframe is a subframe for transmitting the pilot signal.

In some embodiments, the timing of the subframe includes a start time of the subframe or an end time of the subframe.

In some embodiments, the first device is a positioning server.

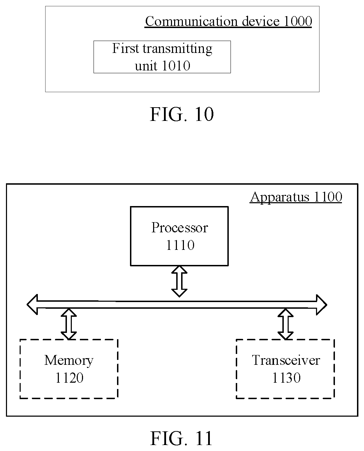

FIG. 10 is a schematic structural diagram of a communication device 1000 according to some embodiments of the present disclosure. The communication device 1000 as illustrated in FIG. 10 may be the second terminal device as described above.

The communication device 1000 may include: a first transmitting unit 1010, configured to transmit first information to a first device, wherein the first information is used for determining a propagation time between a first terminal device and the second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

In some embodiments, the pilot signal may be a PRS.

In some embodiments, the first information is used for indicating information that indicates whether the first terminal device or the second terminal device is a synchronization source.

In some embodiments, the communication device further includes: a second transmitting unit, configured to transmit the first information to the first device in response to the second terminal device being a terminal device receiving a returned pilot signal in a case where the first terminal device is a synchronization source of the second terminal device or the second terminal device is a synchronization source of the first terminal device.

In some embodiments, the first information is mod(d,T), wherein T represents a subframe time length, d represents a time difference between an actual time when the first terminal device transmits the pilot signal and an actual time when the first terminal device receives the pilot signal, and mod represents a reminder operation.

In some embodiments, the propagation time between the first terminal device and the second terminal device is mod(t,T)/2, wherein T represents the subframe time length, and t represents the time difference between the time when the pilot signal is received and the time when the pilot signal is transmitted indicated in the first information.

In some embodiments, the communication device further includes: a first receiving unit, configured to receive first indication information from the first device or a synchronization source, wherein the first indication information is used for indicating that the second terminal device does not report a time difference between an actual time when the pilot signal is transmitted and an actual time when the pilot signal is received.

In some embodiments, receiving the first indication information from the first device or the synchronization source includes: receiving the first indication information from the first device or the synchronization source in a case where no synchronization time difference is present between the first terminal device and the second terminal device.

In some embodiments, the communication device further includes: a second receiving unit, configured to receive a report request for second information from the first device in a case where a synchronization time difference is present between the first terminal device and the second terminal device and the second terminal device is a synchronization source, wherein the second information is used to indicating the synchronization time difference.

In some embodiments, a time T_{UE-TX} when the pilot signal is transmitted includes one or more of: an instant when the pilot signal is transmitted; a timing of a second subframe, wherein the second subframe is a transmission subframe closest to the time when the pilot signal is received; and a timing of a third subframe, wherein the third subframe is a subframe for transmitting the pilot signal.

In some embodiments, the timing of the subframe includes a start time of the subframe or an end time of the subframe.

In some embodiments, the first device is a positioning server.

FIG. 11 is a schematic diagram of an apparatus 1100 according to some embodiments of the present disclosure. The dotted lines in FIG. 11 indicate that the unit or module is optional. The apparatus 1100 may be employed to perform the method according to the above method embodiments. The apparatus 1100 may be a chip, a terminal device, or a network device.

The apparatus 1100 may include one or more processors 1110. The processor 1110 may support implementation of the method according to the above method embodiments by the apparatus 1100. The processor 1110 may be a general purpose processor or an application-specific processor. For example, the processor may be a central processing unit (CPU). The processor may be a general processor, a digital signal processor (DSP), an application specific integrated circuit (ASIC), a field programmable gate array (FPGA) or another programmable logic device, a discrete gate or transistor logic device, or a discrete hardware component, or the like. The general-purpose processor may be a microprocessor or any customary processor or the like.

The apparatus 1100 may further include one or more memories 1120. The memory 1120 has stored thereon a program that is executable by the processor 1110 to cause the processor 1110 to perform the method described in the above method embodiments. The memory 1120 may be separate from the processor 1110 or integrated within the processor 1110.

The apparatus 1100 may also include a transceiver 1130. The processor 1110 may communicate with other devices or chips by the transceiver 1130. For example, the processor 1110 may communicate (transmit and receive) data with other devices or chips by the transceiver 1130.

Some embodiments of the present disclosure further provide a computer-readable storage medium configured to store one or more programs. The computer-readable storage medium may be applied to a communication device according to the embodiments of the present disclosure, and the computer program causes a computer to perform the method performed by the communication device according to the respective embodiments of the present disclosure.

Some embodiments of the present disclosure further provide a computer program product. The computer program product includes one or more programs. The computer program may be applied to a communication device according to the embodiments of the present disclosure, and the computer program causes a computer to perform the method performed by the communication device according to the respective embodiments of the present disclosure.

Some embodiments of the present disclosure further provide a computer program. The computer program may be applied to a communication device according to the embodiments of the present disclosure, and the computer program causes a computer to perform the method performed by the communication device according to the respective embodiments of the present disclosure.

It should be understood that the terms "system" and "network" in the specification are generally exchanged. Further, the terms used herein are for the purpose of describing particular embodiments only and are not intended to limit the present disclosure. The terms such as "first," "second," "third," "fourth," and the like in the specifications, claims and the accompanying drawings of the present disclosure are intended to distinguishing different objects but are not intended to define a specific sequence. In addition, terms "comprise," "include," and variations thereof are intended to define a non-exclusive meaning.

In the embodiments of the present disclosure, the term "indication" mentioned in the specification may indicate a direct indication, an indirect indication, or an association. By way of example, the expression "A indicates B" may mean that A directly indicates B, e.g., B may be obtained by A; or mean that A indicates B indirectly, for example A indicates C, and B may be obtained by C; or mean that an association is present between A and B.

In the embodiments of the present disclosure, the expression "B corresponding to A" means that B is associated with A, from which B may be determined. However, it should also be understood that determining B from A does not mean determining B from A alone, and B may also be determined from A and/or other information.

In the embodiments of the present disclosure, the term "correspond" or derivatives thereof may mean that there is a direct correspondence or an indirect correspondence between the two, that there is a correlation between the two, and that there is a relationship between indicating and being indicated, configuring and being configured, or the like.

In embodiments of the present disclosure, "pre-defined" or "pre-configured" may be implemented by pre-storing a corresponding code, table, or other means that may be used to indicate relevant information in a device (e.g., including a terminal device and a network device), and the present disclosure does not limit the specific implementation thereof. For example, the term "predefined" may refer to "defined in the protocol."

In embodiments of the present disclosure, the term "protocol" may refer to a standard protocol in the field of communications, and may include, for example, the LTE protocol, the NR protocol, and related protocols used in future communication systems, without limitation.

In the description of the embodiments of the present disclosure, the term "and/or" is merely an association relationship for describing associated objects, which represents that there may exist three types of relationships, for example, A and/or B may represent three situations: only A exists, both A and B exist, and only B exists. In addition, the forward-slash symbol "/" generally represents an "or" relationship between associated objects before and after the symbol.

It should be understood that in various embodiments of the present disclosure, the sequence numbers of the above various processes or steps do not denote a preferred sequence of performing the processes or steps; and the sequence of performing the processes and steps should be determined according to the functions and internal logics thereof, which shall not cause any limitation to the implementation process of the embodiments of the present disclosure.

In the several embodiments provided in the present disclosure, it should be understood that the disclosed system, apparatus and method may be practiced in other manners. The above described device embodiments are merely illustrative. For example, the unit division is merely logical function division and may be other divisions in actual practice. For example, multiple units or components may be combined or integrated into another system, or some features can be ignored or not performed. Additionally, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same position or may be distributed into a plurality of network units. Some of or all of the units may be selected according to actual needs to achieve the objectives of the solutions of the embodiments.

In addition, functional units in the embodiments of the present disclosure may be integrated into one processing unit, or each of the units may exist along physically, or two or more units may be integrated into one unit.

In the above embodiments, the technical solutions may be totally or partially practiced by software, hardware, firmware or any combination thereof. During practice by software, the technical solutions may be totally or partially implemented in the form of a computer program product. The computer program product includes one or a plurality of computer-executable instructions. The computer program instructions, when loaded and executed on a computer, may cause the computer to totally or partially perform the procedures or functions in the embodiments of the present disclosure. The computer may be a general computer, a dedicated computer, a computer network, or another programming device. The computer-executable instructions may be stored in a computer-readable storage medium, or transferred from one computer-readable storage medium to another. For example, the computer-executable instructions may be transmitted from one website, computer, server or data center to another in a wired fashion, for example, a coaxial cable, an optical fiber, a digital subscriber line (DSL) or a wireless fashion, for example, an infrared ray, a radio, a microwave or the like. The computer-readable storage medium may be any available medium that is accessible or a data storage device such as a server, a data center or the like integrated with one or a plurality of available media. The available medium may be a magnetic medium, for example, a floppy disk, a hard disk or a magnetic tape, an optical medium, for example, a digital versatile disc (DVD), or a semiconductor medium, for example, a solid state disk (SSD) or the like.

The above embodiments are used only for illustrating the present disclosure, but are not intended to limit the protection scope of the present disclosure. Various modifications and replacements readily derived by those skilled in the art within technical disclosure of the present disclosure shall fall within the protection scope of the present disclosure. Therefore, the protection scope of the present disclosure is subject to the appended claims.

## Claims

1. A sidelink positioning method, applicable to a first device, the method comprising:
determining a propagation time between a first terminal device and a second terminal device based on first information to position the second terminal device,
wherein the first information is used for indicating a time difference between times when a terminal device receives a pilot signal and transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

2. The method according to claim 1, wherein the pilot signal is a positioning reference signal (PRS).

3. The method according to claim 1 or 2, wherein the first information is used for indicating information that indicates whether the first terminal device or the second terminal device is a synchronization source.

4. The method according to claim 3, wherein in a case where the first terminal device is a synchronization source of the second terminal device or the second terminal device is a synchronization source of the first terminal device, the first information is reported by a terminal device in the first terminal device and the second terminal device that receives a returned pilot signal.

5. The method according to claim 4, wherein the first information is mod(d,T), wherein T represents a subframe time length, and d represents a time difference between an actual time when the first terminal device transmits the pilot signal and an actual time when the first terminal device receives the pilot signal, and mod represents a reminder operation.

6. The method according to claim 5, wherein determining the propagation time between the first terminal device and the second terminal device based on the first information comprises:
determining the propagation time as equal to mod(t,T)/2;
wherein T represents the subframe time length, and t represents the time difference between the time when the terminal device receives the pilot signal and the time when the terminal device transmits the pilot signal indicated in the first information.

7. The method according to claim 1 or 2, further comprising:
transmitting first indication information to the first terminal device or the second terminal device, wherein the first indication information is used for indicating that the first terminal device or the second terminal device does not report a time difference between an actual time when the pilot signal is transmitted and an actual time when the pilot signal is received.

8. The method according to claim 7, wherein transmitting the first indication information to the first terminal device or the second terminal device comprises:
transmitting the first indication information to the first terminal device or the second terminal device in a case where no synchronization time difference is present between the first terminal device and the second terminal device.

9. The method according to claim 1 or 2, further comprising:
receiving second information in a case where a synchronization time difference is present between the first terminal device and the second terminal device, wherein the second information is used for indicating the synchronization time difference.

10. The method according to claim 9, wherein the second information is transmitted by a synchronization source of the first terminal device or the second terminal device.

11. The method according to claim 9, wherein prior to receiving the second information, the method further comprises:
transmitting a report request for the second information to a synchronization source of the first terminal device or the second terminal device.

12. The method according to any one of claims 1 to 11, further comprising:
receiving third information from one or more synchronization sources, wherein the third information is used for indicating a terminal device in synchronization with the one or more synchronization sources.

13. The method according to any one of claims 1 to 12, wherein the time T_{UE-TX} when the pilot signal is transmitted comprises one or more of:
an instant when the pilot signal is transmitted;
a timing of a second subframe, wherein the second subframe is a transmission subframe closest to the time when the pilot signal is received; and
a timing of a third subframe, wherein the third subframe is a subframe for transmitting the pilot signal.

14. The method according to claim 13, wherein the timing of the subframe comprises a start time of the subframe or an end time of the subframe.

15. The method according to any one of claims 1 to 14, wherein the first device is a positioning server.

16. A sidelink positioning method, applicable to a first terminal device, the method comprising:
transmitting first information to a first device, wherein the first information is used for determining a propagation time between the first terminal device and a second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

17. The method according to claim 16, wherein the pilot signal is a positioning reference signal (PRS).

18. The method according to claim 16 or 17, wherein the first information is used for indicating information that indicates whether the first terminal device or the second terminal device is a synchronization source.

19. The method according to claim 18, further comprising:
transmitting the first information to the first device in response to the first terminal device being a terminal device receiving a returned pilot signal in a case where the first terminal device is a synchronization source of the second terminal device or the second terminal device is a synchronization source of the first terminal device.

20. The method according to claim 19, wherein the first information is mod(d,T), wherein T represents a subframe time length, d represents a time difference between an actual time when the first terminal device transmits the pilot signal and an actual time when the first terminal device receives the pilot signal, and mod represents a reminder operation.

21. The method according to claim 20, wherein the propagation time between the first terminal device and the second terminal device is mod(t,T)/2, wherein T represents the subframe time length, and t represents the time difference between the time when the pilot signal is received and the time when the pilot signal is transmitted indicated in the first information.

22. The method according to claim 16 or 17, further comprising:
receiving first indication information from the first device or a synchronization source, wherein the first indication information is used for indicating that the first terminal device does not report a time difference between an actual time when the pilot signal is transmitted and an actual time when the pilot signal is received.

23. The method according to claim 22, wherein receiving the first indication information from the first device or the synchronization source comprises:
receiving the first indication information from the first device or the synchronization source in a case where no synchronization time difference is present between the first terminal device and the second terminal device.

24. The method according to claim 16 or 17, further comprising:
receiving a report request for second information from the first device in a case where a synchronization time difference is present between the first terminal device and the second terminal device and the first terminal device is a synchronization source, wherein the second information is used to indicating the synchronization time difference.

25. The method according to any one of claims 16 to 24, wherein the time T_{UE-TX} when the pilot signal is transmitted comprises one or more of:
an instant when the pilot signal is transmitted;
a timing of a second subframe, wherein the second subframe is a transmission subframe closest to the time when the pilot signal is received; and
a timing of a third subframe, wherein the third subframe is a subframe for transmitting the pilot signal.

26. The method according to claim 25, wherein the timing of the subframe comprises a start time of the subframe or an end time of the subframe.

27. The method according to any one of claims 16 to 26, wherein the first device is a positioning server.

28. A sidelink positioning method, applicable to a second terminal device, the method comprising:
transmitting first information to a first device, wherein the first information is used for determining a propagation time between a first terminal device and the second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

29. The method according to claim 28, wherein the pilot signal is a positioning reference signal (PRS).

30. The method according to claim 28 or 29, wherein the first information is used for indicating information that indicates whether the first terminal device or the second terminal device is a synchronization source.

31. The method according to claim 30, further comprising:
transmitting the first information to the first device in response to the second terminal device being a terminal device receiving a returned pilot signal in a case where the first terminal device is a synchronization source of the second terminal device or the second terminal device is a synchronization source of the first terminal device.

32. The method according to claim 31, wherein the first information is mod(d,T), wherein T represents a subframe time length, and d represents a time difference between an actual time when the first terminal device transmits the pilot signal and an actual time when the first terminal device receives the pilot signal, and mod represents a reminder operation.

33. The method according to claim 32, wherein the propagation time between the first terminal device and the second terminal device is mod(t,T)/2, wherein T represents the subframe time length, and t represents the time difference between the time when the pilot signal is received and the time when the pilot signal is transmitted indicated in the first information.

34. The method according to claim 28 or 29, further comprising:
receiving first indication information from the first device or a synchronization source, wherein the first indication information is used for indicating that the second terminal device does not report a time difference between an actual time when the pilot signal is transmitted and an actual time when the pilot signal is received.

35. The method according to claim 34, wherein receiving the first indication information from the first device or the synchronization source comprises:
receiving the first indication information from the first device or the synchronization source in a case where no synchronization time difference is present between the first terminal device and the second terminal device.

36. The method according to claim 28 or 29, further comprising:
receiving a report request for second information from the first device in a case where a synchronization time difference is present between the first terminal device and the second terminal device and the second terminal device is a synchronization source, wherein the second information is used to indicating the synchronization time difference.

37. The method according to any one of claims 28 to 36, wherein the time T_{UE-TX} when the pilot signal is transmitted comprises one or more of:
an instant when the pilot signal is transmitted;
a timing of a second subframe, wherein the second subframe is a transmission subframe closest to the time when the pilot signal is received; and
a timing of a third subframe, wherein the third subframe is a subframe for transmitting the pilot signal.

38. The method according to claim 37, wherein the timing of the subframe comprises a start time of the subframe or an end time of the subframe.

39. The method according to any one of claims 28 to 38, wherein the first device is a positioning server.

40. A communication device, wherein the communication device is a first device, and the communication device comprises:
a determining unit, configured to determine a propagation time between a first terminal device and a second terminal device based on first information to position the second terminal device,
wherein the first information is used for indicating a time difference between times when a terminal device receives a pilot signal and transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

41. The communication device according to claim 40, wherein the pilot signal is a positioning reference signal (PRS).

42. The communication device according to claim 40 or 41, wherein the first information is used for indicating information that indicates whether the first terminal device or the second terminal device is a synchronization source.

43. The communication device according to claim 42, wherein in a case where the first terminal device is a synchronization source of the second terminal device or the second terminal device is a synchronization source of the first terminal device, the first information is reported by a terminal device in the first terminal device and the second terminal device that receives a returned pilot signal.

44. The communication device according to claim 43, wherein the first information is mod(d,T), wherein T represents a subframe time length, and d represents a time difference between an actual time when the first terminal device transmits the pilot signal and an actual time when the first terminal device receives the pilot signal, and mod represents a reminder operation.

45. The communication device according to claim 44, wherein determining the propagation time between the first terminal device and the second terminal device based on the first information comprises:
determining the propagation time as equal to mod(t,T)/2;
wherein T represents the subframe time length, and t represents the time difference between the time when the terminal device receives the pilot signal and the time when the terminal device transmits the pilot signal indicated in the first information.

46. The communication device according to claim 40 or 41, further comprising:
a first transmitting unit, configured to transmit first indication information to the first terminal device or the second terminal device, wherein the first indication information is used for indicating that the first terminal device or the second terminal device does not report a time difference between an actual time when the pilot signal is transmitted and an actual time when the pilot signal is received.

47. The communication device according to claim 46, wherein transmitting the first indication information to the first terminal device or the second terminal device comprises:
transmitting the first indication information to the first terminal device or the second terminal device in a case where no synchronization time difference is present between the first terminal device and the second terminal device.

48. The communication device according to claim 40 or 41, further comprising:
a first receiving unit, configured to receive second information in a case where a synchronization time difference is present between the first terminal device and the second terminal device, wherein the second information is used for indicating the synchronization time difference.

49. The communication device according to claim 48, wherein the second information is transmitted by a synchronization source of the first terminal device or the second terminal device.

50. The communication device according to claim 49, further comprising:
a second transmitting unit, configured to prior to receiving the second information, transmit a report request for the second information to a synchronization source of the first terminal device or the second terminal device.

51. The communication device according to any one of claims 45 to 50, further comprising:
a second receiving unit, configured to receive third information from one or more synchronization sources, wherein the third information is used for indicating a terminal device in synchronization with the one or more synchronization sources.

52. The communication device according to any one of claims 40 to 51, wherein the time T_{UE-TX} when the pilot signal is transmitted comprises one or more of:
an instant when the pilot signal is transmitted;
a timing of a second subframe, wherein the second subframe is a transmission subframe closest to the time when the pilot signal is received; and
a timing of a third subframe, wherein the third subframe is a subframe for transmitting the pilot signal.

53. The communication device according to claim 52, wherein the timing of the subframe comprises a start time of the subframe or an end time of the subframe.

54. The communication device according to any one of claims 40 to 53, wherein the first device is a positioning server.

55. A communication device, wherein the communication device is a first terminal device, and the communication device comprises:
a first transmitting unit, configured to transmit first information to a first device, wherein the first information is used for determining a propagation time between the first terminal device and a second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

56. The communication device according to claim 55, wherein the pilot signal is a positioning reference signal (PRS).

57. The communication device according to claim 55 or 56, wherein the first information is used for indicating information that indicates whether the first terminal device or the second terminal device is a synchronization source.

58. The communication device according to claim 57, further comprising:
a second transmitting unit, configured to transmit the first information to the first device in response to the first terminal device being a terminal device receiving a returned pilot signal in a case where the first terminal device is a synchronization source of the second terminal device or the second terminal device is a synchronization source of the first terminal device.

59. The communication device according to claim 58, wherein the first information is mod(d,T), wherein T represents a subframe time length, and d represents a time difference between an actual time when the first terminal device transmits the pilot signal and an actual time when the first terminal device receives the pilot signal, and mod represents a reminder operation.

60. The communication device according to claim 59, wherein the propagation time between the first terminal device and the second terminal device is mod(t,T)/2, wherein T represents the subframe time length, and t represents the time difference between the time when the pilot signal is received and the time when the pilot signal is transmitted indicated in the first information.

61. The communication device according to claim 55 or 56, further comprising:
a first receiving unit, configured to receive first indication information from the first device or a synchronization source, wherein the first indication information is used for indicating that the first terminal device does not report a time difference between an actual time when the pilot signal is transmitted and an actual time when the pilot signal is received.

62. The communication device according to claim 61, wherein receiving the first indication information from the first device or the synchronization source comprises:
receiving the first indication information from the first device or the synchronization source in a case where no synchronization time difference is present between the first terminal device and the second terminal device.

63. The communication device according to claim 55 or 56, further comprising:
a second receiving unit, configured to receive a report request for second information from the first device in a case where a synchronization time difference is present between the first terminal device and the second terminal device and the first terminal device is a synchronization source, wherein the second information is used to indicating the synchronization time difference.

64. The communication device according to any one of claims 55 to 63, wherein the time T_{UE-TX} when the pilot signal is transmitted comprises one or more of:
an instant when the pilot signal is transmitted;
a timing of a second subframe, wherein the second subframe is a transmission subframe closest to the time when the pilot signal is received; and
a timing of a third subframe, wherein the third subframe is a subframe for transmitting the pilot signal.

65. The communication device according to claim 64, wherein the timing of the subframe comprises a start time of the subframe or an end time of the subframe.

66. The communication device according to any one of claims 55 to 65, wherein the first device is a positioning server.

67. A communication device, wherein the communication device is a second terminal device, and the communication device comprises:
a first transmitting unit, configured to transmit first information to a first device, wherein the first information is used for determining a propagation time between a first terminal device and the second terminal device to position the second terminal device, and the first information is used for indicating a time difference between a time when the first terminal device receives a pilot signal and a time when the first terminal device transmits a pilot signal, wherein the time when the pilot signal is transmitted is a time converted based on an actual time when the pilot signal is transmitted, and the time when the pilot signal is transmitted and the time when the pilot signal is received are directed to pilot signals at different instants.

68. The communication device according to claim 67, wherein the pilot signal is a positioning reference signal (PRS).

69. The communication device according to claim 67 or 68, wherein the first information is used for indicating information that indicates whether the first terminal device or the second terminal device is a synchronization source.

70. The communication device according to claim 69, further comprising:
a second transmitting unit, configured to transmit the first information to the first device in response to the second terminal device being a terminal device receiving a returned pilot signal in a case where the first terminal device is a synchronization source of the second terminal device or the second terminal device is a synchronization source of the first terminal device.

71. The communication device according to claim 70, wherein the first information is mod(d,T), wherein T represents a subframe time length, and d represents a time difference between an actual time when the first terminal device transmits the pilot signal and an actual time when the first terminal device receives the pilot signal, and mod represents a reminder operation.

72. The communication device according to claim 71, wherein the propagation time between the first terminal device and the second terminal device is mod(t,T)/2, wherein T represents the subframe time length, and t represents the time difference between the time when the pilot signal is received and the time when the pilot signal is transmitted indicated in the first information.

73. The communication device according to claim 67 or 68, further comprising:
a first receiving unit, configured to receive first indication information from the first device or a synchronization source, wherein the first indication information is used for indicating that the second terminal device does not report a time difference between an actual time when the pilot signal is transmitted and an actual time when the pilot signal is received.

74. The communication device according to claim 73, wherein receiving the first indication information from the first device or the synchronization source comprises:
receiving the first indication information from the first device or the synchronization source in a case where no synchronization time difference is present between the first terminal device and the second terminal device.

75. The communication device according to claim 67 or 68, further comprising:
a second receiving unit, configured to receive a report request for second information from the first device in a case where a synchronization time difference is present between the first terminal device and the second terminal device and the second terminal device is a synchronization source, wherein the second information is used to indicating the synchronization time difference.

76. The communication device according to any one of claims 67 to 75, wherein the time T_{UE-TX} when the pilot signal is transmitted comprises one or more of:
an instant when the pilot signal is transmitted;
a timing of a second subframe, wherein the second subframe is a transmission subframe closest to the time when the pilot signal is received; and
a timing of a third subframe, wherein the third subframe is a subframe for transmitting the pilot signal.

77. The communication device according to claim 76, wherein the timing of the subframe comprises a start time of the subframe or an end time of the subframe.

78. The communication device according to any one of claims 67 to 77, wherein the first device is a positioning server.

79. A communication device, comprising: a transceiver, a memory, and a processor, wherein the memory is configured to store one or more programs, and the processor is configured to call the one or more programs stored in the memory and control the transceiver to receive or transmit a signal to cause the communication device to perform the method as defined in any one of claims 1 to 15, the method as defined in any one of claims 16 to 27, or the method as defined in any one of claims 28 to 39.

80. An apparatus, comprising: a processor, wherein the processor is configured to call one or more programs from a memory to cause the apparatus to perform the method as defined in any one of claims 1 to 15, the method as defined in any one of claims 16 to 27, or the method as defined in any one of claims 28 to 39.

81. A chip, comprising: a processor, wherein the processor is configured to call one or more programs from a memory to cause a device equipped with the chip to perform the method as defined in any one of claims 1 to 15, the method as defined in any one of claims 16 to 27, or the method as defined in any one of claims 28 to 39.

82. A computer-readable storage medium, storing one or more programs therein, wherein the one or more programs, when loaded and run by a computer, cause the computer to perform the method as defined in any one of claims 1 to 15, the method as defined in any one of claims 16 to 27, or the method as defined in any one of claims 28 to 39.

83. A computer program product, comprising one or more programs therein, wherein the one or more programs, when loaded and run by a computer, cause the computer to perform the method as defined in any one of claims 1 to 15, the method as defined in any one of claims 16 to 27, or the method as defined in any one of claims 28 to 39.

84. A computer program, wherein the computer program, when loaded and run by a computer, causes the computer to perform the method as defined in any one of claims 1 to 15, the method as defined in any one of claims 16 to 27, or the method as defined in any one of claims 28 to 39.
